Europäisches Patentamt

European Patent Office

Office européen des brevets

(19)

(11) Publication number: **0 333 625**
**A2**

(12)
# EUROPEAN PATENT APPLICATION

(21) Application number: **89600006.4**

(51) Int. Cl.4: **F 03 G 3/00**

(22) Date of filing: **27.03.89**

(30) Priority: **05.04.88 GR 88010223**

(43) Date of publication of application:
**20.09.89 Bulletin 89/38**

(84) Designated Contracting States:
**AT BE CH DE ES FR GB GR IT LI NL SE**

(71) Applicant: **Thomas, Alexis**
**6, Kanari Street**
**142 33 Nea Ionia Athens (GR)**

(72) Inventor: **Thomas, Alexis**
**6, Kanari Street**
**142 33 Nea Ionia Athens (GR)**

(54) **Energy generating method and mechanism by converting cylinder's impetus and angural momentum into axes rotary motion.**

(57) The invention concerns a cylinders arrangament, preferably rolling at a high speed (200 km/h) on nine concentrical peripheries inclined inwards, whose the first outer one has a diameter 2000M, each being 50 cm apart from its next one. On each periphery there is a filling of cylinders placed at distances in the range of 160 cm, at which distance a traction machine is fitted to tract the appropriate group of coupled cylinders, where the said traction machines of each periphery are interconnected to obtain a uniform rotatory speed.

The whole unit is fixed into a cemented, antiseismic ground beneath which an arrangement of axes are fitted to which the rotatory motion is conveyed coming from the impetus and angular momentum of the cylinders, duly transmitted to a pistons arrangement to which the axes are connected. In the axes' ends ditches can be dug out, and electric generators installed in.

FIG. 1

EP 0 333 625 A2

## Description

## Energy-generating method and mechanism by converting cylinders' impetus and angular momentum into axes' rotary motion.

### HISTORY OF INVENTION

The present invention pertains to the area of methods and mechanisms for energy generation. The method and mechanism proposed in this invention has not been known to scientific theory and technology so far.

Worldwide man has been known to try and exploit all existing-albeit limited- sources of energy, and to discover more such sources as the energy question becomes increasingly pressing and of vital importance to the survival and development on our planet. Mankind's rise of civilisation standards and developing activity on the earth is leading to an all-increasing demand of energy, whilst conventional sources of energy are becoming shorter and shorter in terms of available reserves. On the other hand, restless efforts made in the exploitation of energy sources have often led to a remarkable aggravation and damage to the environment, such as by burning carbohydrates in internal and external combustion engines, but also pollution by new energy sources, like propagation and extension of atomic and nuclear energy stations, in which accidents, if occur, might cause unforessen and often irreparable damage.

Such being the situation today regarding the energy problem and there seeming to be a deadlock in this respect, it is necessary to try and find solutions that safeguard a harmless and free way of development of technology and the mankind itself also on this planet.

This invention is designed to offer an energy generating system, that is free of pollution and the other undesirable effects characterizing previous technology, capable of giving a solution to the energy problem.

It also provides the theory upon which its method works, based on which theory very sturdy, long-lasting mechanisms with low maintenance requirements may be constructed on the desired specification each time, sizes, output levels, etc. at low construction and operation costs.

These and other characteristics, things and advantages of this invention can be seen in the analytical descriptions given hereinafter.

In a typical outline of this invention, its method uses a metallic cylinder mounted on a metallic, smooth, rectilinear, horizontal surface, where its surface of support and rolling constitutes a straight made up of the support points. The vertical plane through the centre to the contact points divides the cylinder in two cylinder halves equal in weight and size. If a weight is placed on one of them and provided friction is overcome, the cylinder starts to move. Also, if pulling is applied through the cylinder's gravity centre, a weight force is added which moves the cylinder which as it rotates acquires an all-increasing inpetous and angular momentum, as under continuous movement the cylinder halves, which press each other, are constantly changing.

### THE DRAWINGS

The present invention can be clearly understood by specialized people if reference in made to the accompanying drawings, which give an indicative outline of the invention.

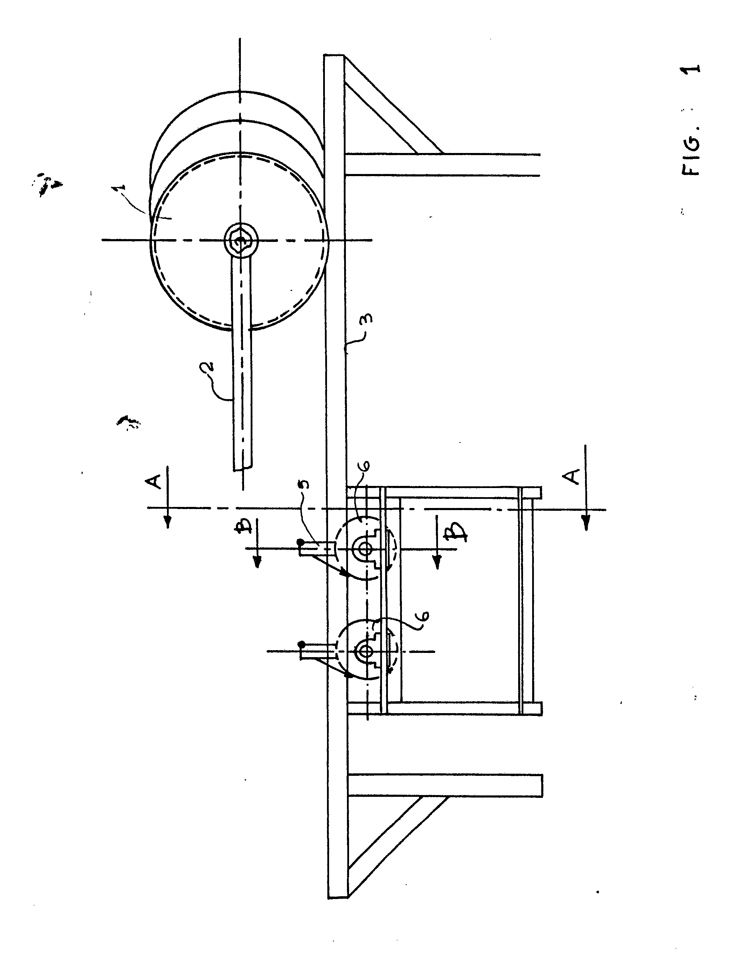

Figure 1 outlines the front view of a cylinder which, pulled mechanically, comes to strike the disks-pistons placed at pre-set intervals along its course.

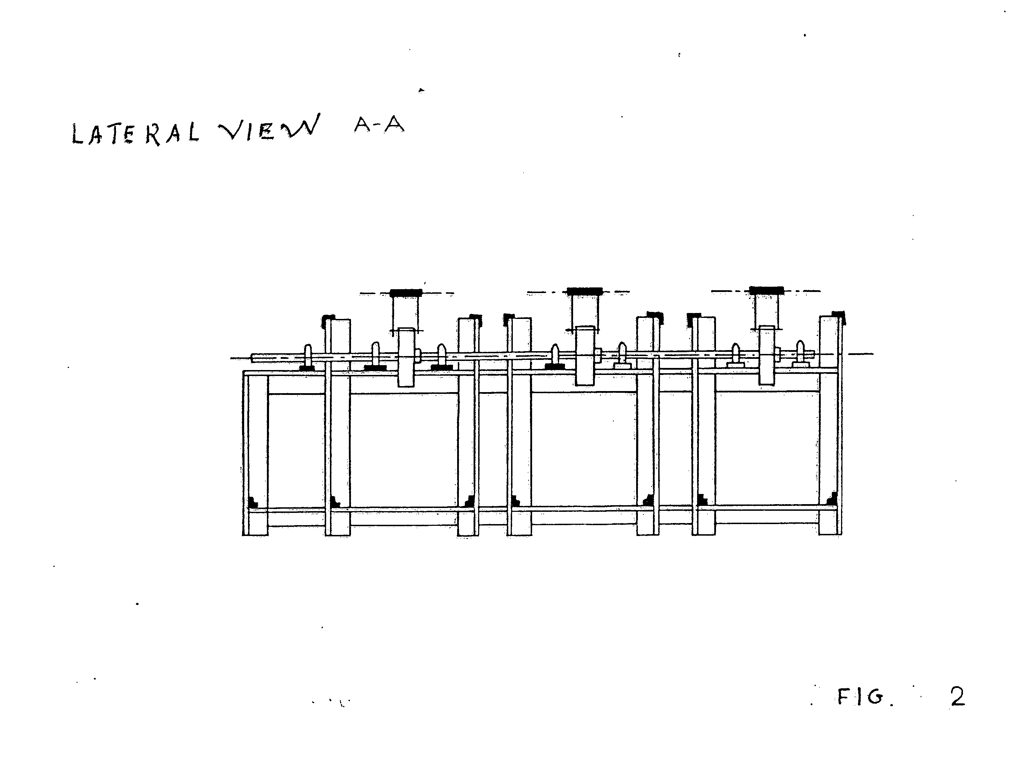

Figure 2 is the lateral view, form the right, of the entire system of the invention, showing the position of the second frame of the mechanism on which the drive shaft is supported with its wheels. Also, the axis' bearing points at their bases can be seen.

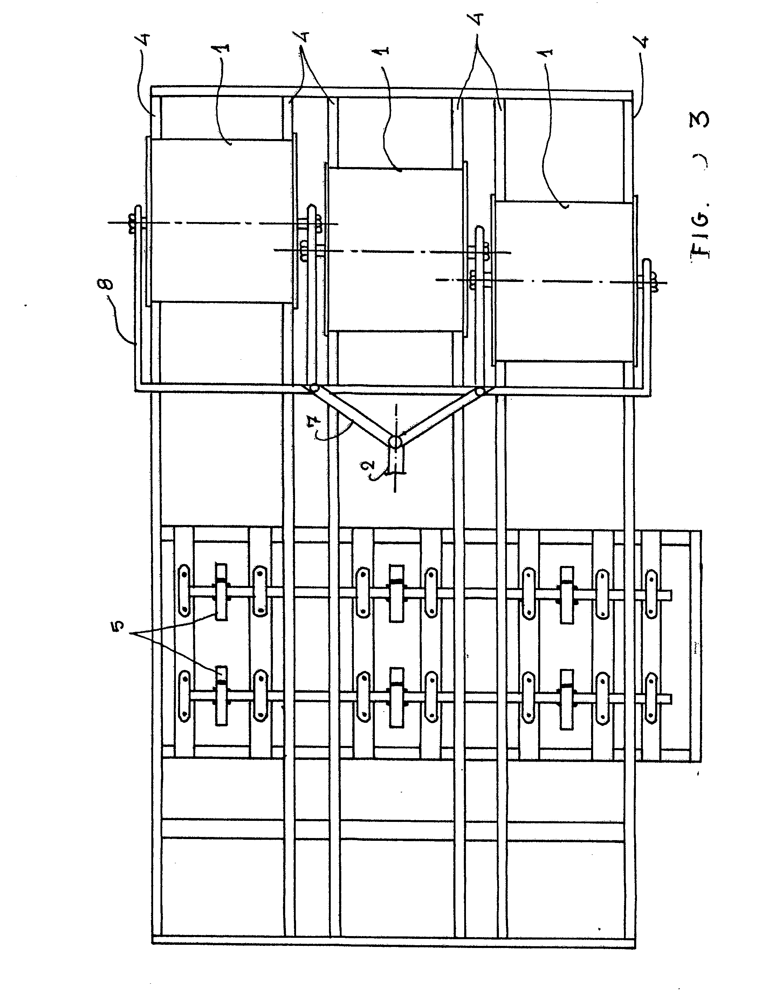

Figure 3 is a vertical view of the entire mechanism, showing the arrangement of the moving axes with their wheels, plus the arrangement of the moving cylinders, which accomodates a lasting ratation of the axis by these specially designed wheels, which do not allow the axis to turn in the reverse way, regardless of loads applied. The cylinders' movement can be effected by means of shears shown in the drawing, driven at the rack by an electric motor or other source of power.

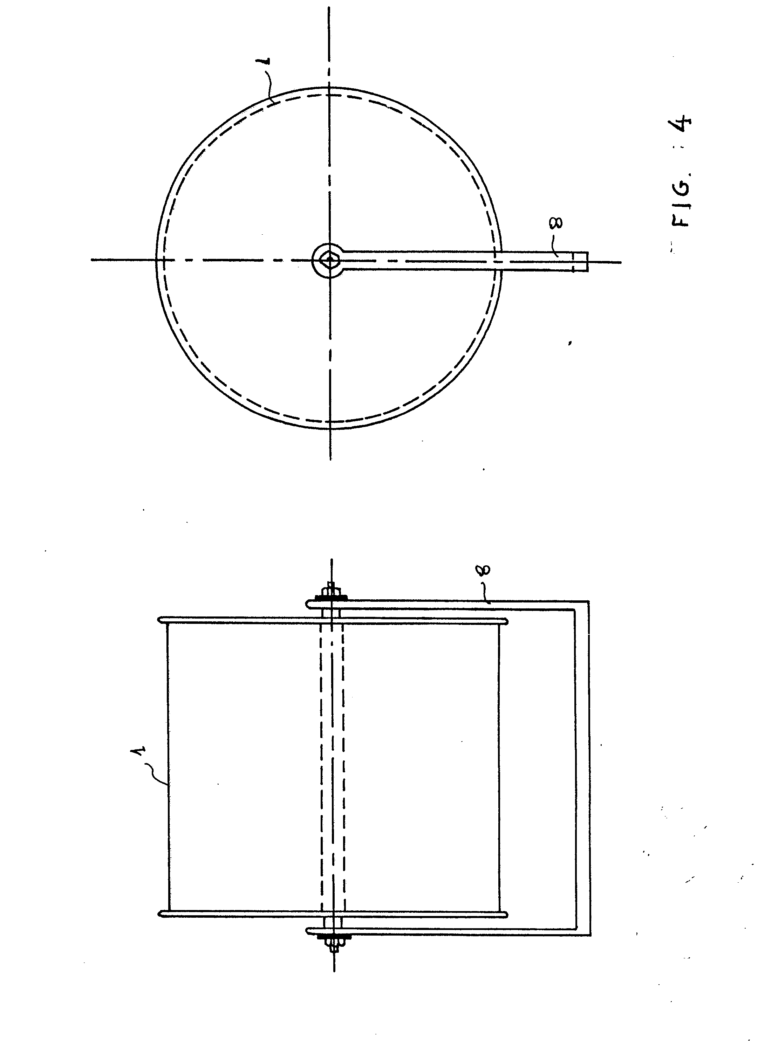

Figure 4 shows the system's cylinders in front and lateral (left) views. As shown in the picture, the cylinder is fitted with a hoop around it to enable a rectilinear movement along the rails.

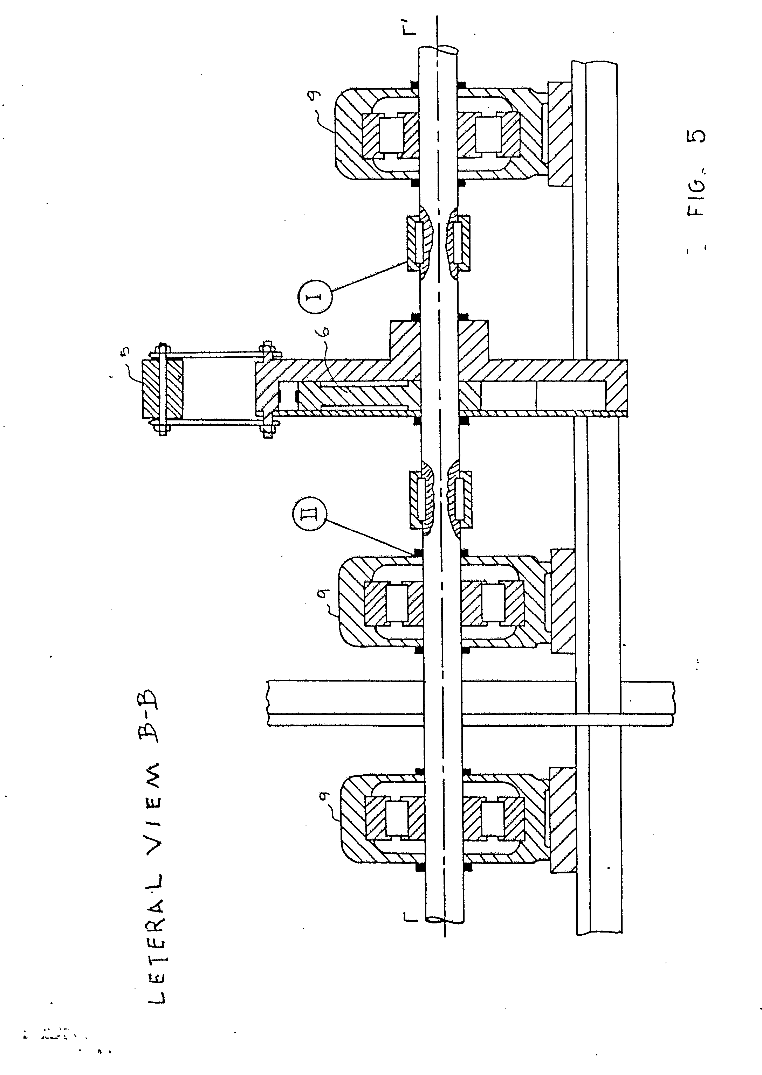

Figure 5 shows the axis in a lateral section B-B, without the rest mechanism; the axis' bearings and special one-way wheels can be seen.

Figure 6 shows the profile and cross-sections of the special, one-way moving wheel.

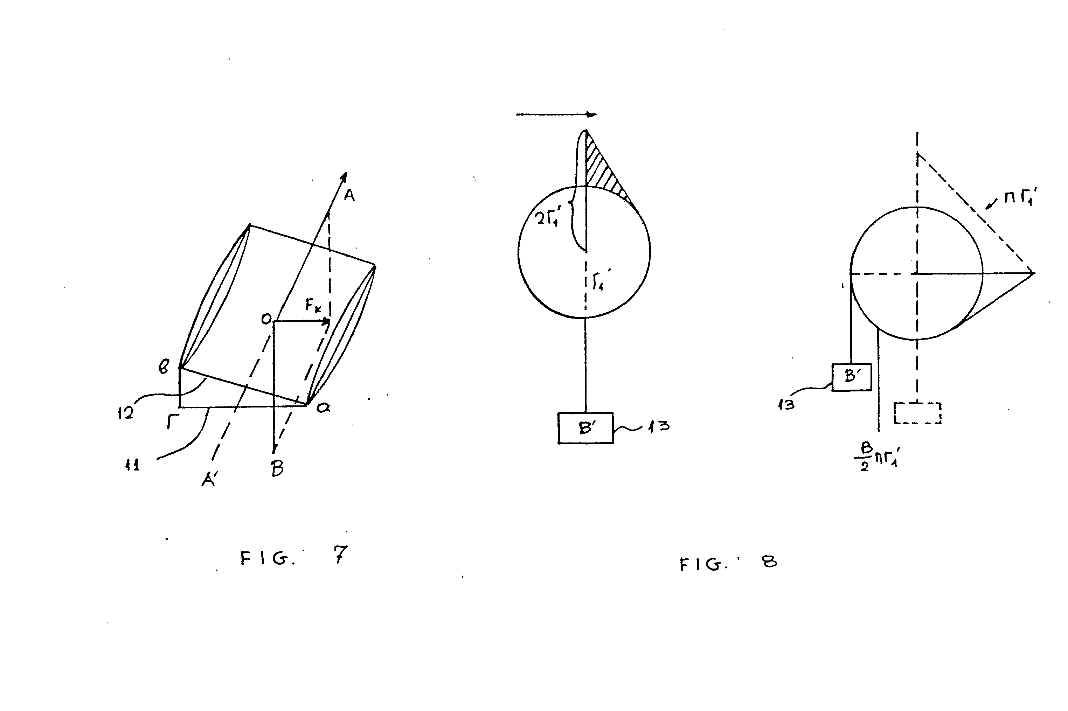

Figure 7 outlines the forces exerted to the cylinder which travels on an inclined plane.

Figure 8 shows a diagram indicating that the disk-piston after the cylinder's impact rotates to run two arches.

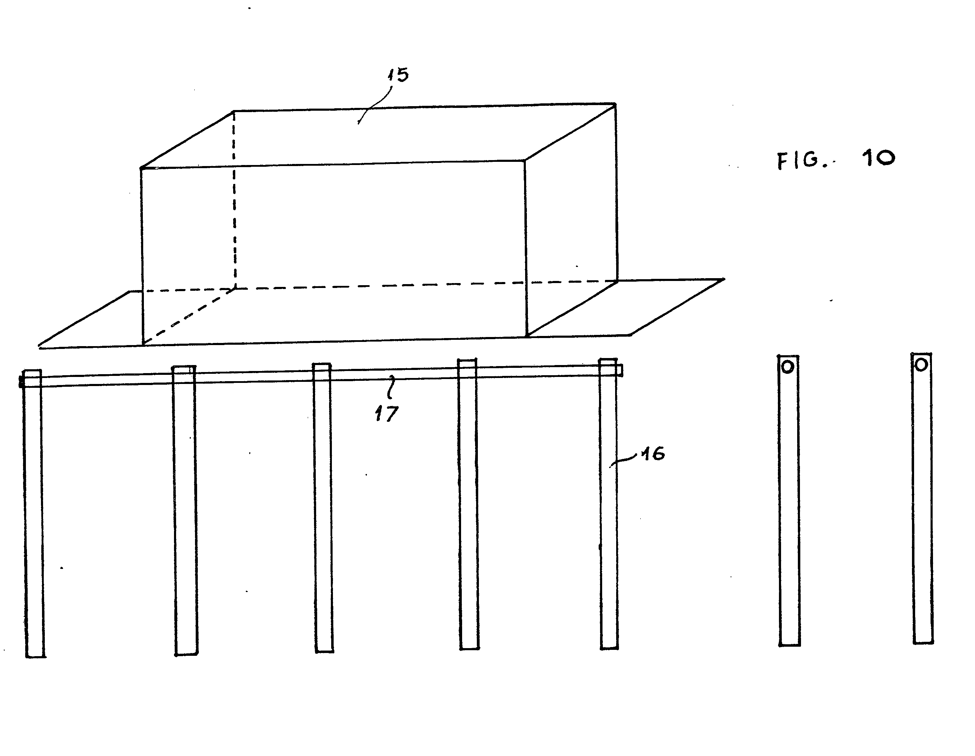

Figure 9 outlines cylinders' arrangement as they travel in a circular path, in a typical application of the invention using intercylindrically specially designed rails for the frame of the coupling mechanisms to move along.

Figure 10 shows in accordance to an illustrative embodiment the table onto which the bearings are mounted, as well as the rods and shafts comprising the table's supporting basement.

The components and parts of the system are numbered herein with numbers corresponding to their accompanying drawings.

1. Cylinder

2. Cylinder pulling shaft
3. Cylinder supporting and rolling table
4. Rails for cylinder's rolling
5. Disk-Piston
6. Specially-made, one-way travelling wheel
7. Cylinders arrangement pulling shear
8. Hoop around cylinder
9. Bearings
10. Return spring
11. Horizontal surface
12. Inclined surface
13. Liftable weight
14. Arm transmitting turning moment to wheel 6.
15. Table supporting the bearings.
16. Rods supporting the shafts
17. Shafts of the supporting system of the tables.

DETAILED DESCRIPTION OF INVENTION

Refering to the accompanying drawings, let's now describe some preferential forms of the invented system.

In a typical application of the invention, confirmed also experimentally, cylinder 1 having diameter 37 cm, weight 102 kgs or so, is placed on two parallel rails 4, supported on the table 3. Driven by a motor at 122.5 r.p.m., whose the axis is connected alternatively with three gears having diameters 7,10,5, and 22 cm respectively, and activates a cylinder tracting rack. The gears are connected with a rectilinear gear which attracts the cylinder. Between the cylinder and rectilinear gear I place a dynamometer for measurements. In the bars' middle in the proper way I place 4 pistons approximately 80 cm apart from one another. Measured form the centre of their shaft of connection the pistons' height is 12 cm, including 4 cm from the surface of the cylinders' rolling bars to the cylinders' touch point. To the end of each I fit a flange having the pistons' diameter, on which I place weights each 26 kgs including friction. Each one of the pistons rotates from a position vertical to the axis to the bars' plane thus running a rectilinear distance of nine centimeters. Each time the cylinder is put in motion it has a free travel approximately 180 cm to turn, when it comes in contact (impacts) with the first piston and then with the other 3 pistons. Upon repeated testing, the force, involved in the work of weight raising upon impact of the cylinder onto the pistons and their bending, in accordance to the dynamometer was for the speed of 1616 M/H 47 kgs, for the speed of 2424 39-40 kgs and for the speed of 507, 993 25 kgs. The time period that such a dynamometer indication lasted was very marginal a fraction of a second, and such was the return of the dynamometer's pointer to zero and thence to its normal position. This result is always obtained under the same arrangement and behaviour.

According to mathematical calculation, if the lower speed involves energy a, the second speed being 1/2 faster will involve energy a+1/2, and the third speed being 3 1/7 faster than the first one will involve ax3 1/7. Subsequently, impact must be taken into consideration, because the weights vary with it accordingly. On a test I made, it was found that half the weight I used changed to 35 kgs, from 13 kgs, at the low speed, and to 55 kgs at the high speed, which of course took some time to occur. That is to say, during the impact the cylinder has to cope with 70 kgs at the low speed, and 110 kgs at the high speed. I am speaking of impact, still, in the work I am going to refer to there is a pressure rather than an impact, being that the axis is always moving at the same speed as determined by the alternately bending pistons with the corresponding cylinders contacting them and having the same speed. There is only an impact of the cylinder when touching the piston with the shell of the special wheel, and then an anti-impact system is provided designed to fully eliminate impact.

In accordance to the mathematical calculation, in the second speed the force must be 47+1/2 and of the third speed 27x3 1/7, whereas instead we have 40+1/2 and 25x3 1/7. It follows that, the higher the speed, and consequently the impetus and angular momentum of the cylinders, the less the energy required to produce the same amount of work.

Test:

I doubled the weights when, at the high speed the dynamometer read up to 38 kgs for the pistons' bending, instead of 48 kgs it should have read; that is 25X2=50-2, because two kgs is what the dynamometer nearly reads when the cylinder is tracted free of obstacles. Subsequently, lifting of the weights without the cylinder but with the motor alone, resulted in the motor's stopping with the weights not moving at all at the instant of the weights' lifting.

Obviously, in each different gear different speeds and tractive forces on the cylinder are involved, and the greater the gear's diameter the higher the cylinder's speed and the less the required tractive force becomes. After a certain desired amount of work, the cylinder's still increasing speed produces constantly increasing forces by the impetus and angular momentum, and the correlation of forces changes. According to the calculation refered to in the end, the forces correlation difference is such as to indisputably confirm the aim pursued.

The present invention is aimed at the combined exploitation of the cylinder's linear and rotatory power by collecting the power together to move an axis.

As shown in the accompanying drawings 1-6, one practical specimen of the idea of this invention involves a cylinders' arrangement in which, when they are put in motion, the impact on a parallel arrangement of a corresponding number of pistons occurs in such a way that, before the first piston is completely bent by the first cylinder, the second piston is bent by the second cylinder, and so on, a uniform cylinder traction being achieved via the shear 7; the cylinders are put in motion by means of various types of gears at various speeds. By this arrangement, a smooth axis, running is obtained and found that the higher the speed the less the power needed to tract the cylinders due to the increasing rotatory energy of the angular momentum of the cylinder, despite a hold back of the three cylinders upon the strike of the first cylinder since they have a common axis.

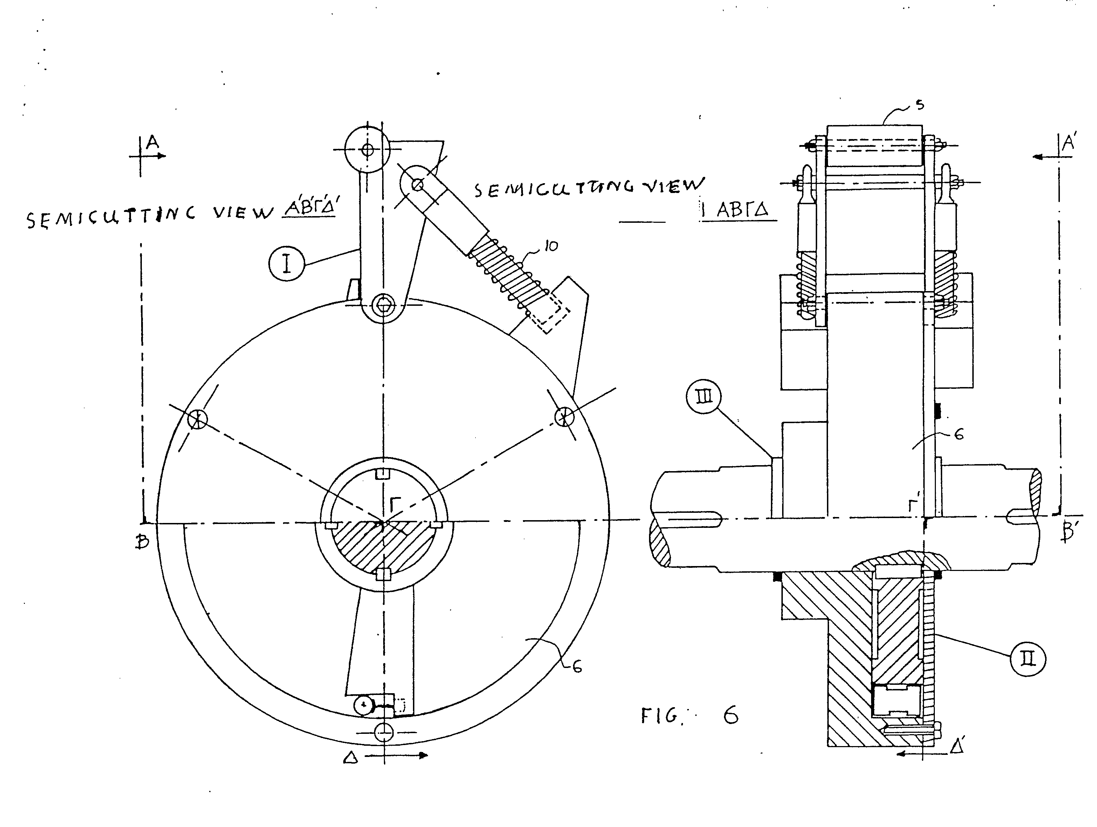

Notable is the role of the special, one-way turning wheel 6, shown in Fig. 6. This wheel is to convert the kinetic energy of the cylinder striking the built-in piston into axial motion. A springs arrangement 10 fitted to the wheels 6 is to damp out bigger striking forces occuring as a result of the cylinders' impact. As seen in Fig.6, the wheel 6 receives a turning moment at its axis via the arm 14, which is connected to the wheel's shell 6 by special nuts. More particularly, this wheel is the one receiving the cylinders' impact and its axis receiving a turning transmitted via an arm (detail I). The arm is fixed via nuts to a shaft on the wheel's shell. At where the arm strikes (contacts) with the cylinder there is a shaft around which a cylindrical ring can freely move. This is to reduce friction when the arm strikes with the cylinder, and itself to bear all the damage caused as a result of many impacts, being possible to replace this rather than the entire arm unit after a number of impacts. The arm (shaped II) is fitted also with another shaft, to which two other shafts are fixed by means of nuts, each shaft having a spring. These shafts can move freely as to the shaft in the arm. They go into two holes with dents (two in number) in the wheel's shell. The shafts have one end flattened, with a hole for attaching it to the arm's pivot by means of a nut, while the shaping at a point alongside it is to hold the ring. There is also a shaping in the hole in each dent on the wheel's shell serving to retain the spring there also. To prevent the shaft and spring from coming out of the holes upon each impact with the cylinder, there is an arrangement at the arm's basis on the wheel's shell, which does not allow movement across (opposit to) the arm with a risk of the spring and shaft coming out of their holes. The two-spring arrangement is aimed to absorb major striking forces developing at the instant of the cylinder's impact with the wheels. The action of springs can be regulated accordingly. The wheel is made up of its shell and a radial arrangement picturing a circle concentric with the wheel's shell. This arrangement of radii (three shown in the drawing) is attached to the autonomous on each wheel's axis by means of wedges (three shown in the drawing). The turning moment caused by the cylinders' impact on the arm of each wheel at its axis is obtained by small cylinders fitted to each radius of the radial arrangement refered to above. The end of each radius is visible in the front view, and hasin it a cylinder as said above. However, the gap between the radius and the wheel's shell is such as not to allow the cylinder to come out from the inside. As a whole, it could be said that during the wheel's shell rotation upon the cylinder's impact, a rolling of the small cylinders result and their wedging between the shell and the radii refered to above (the springs visible at the corner help in it), and the radial arrangement is then made to rotate, of course rotating also the driving wheel's axis. An advantage of the special wheel's arrangement is that the movement is in one direction of course, whilst in the opposit movement the shell is freed from the radial arrangement, and so is therefore the wheel's axis itself. Notable is the end shaping of each radius, where the angle of the contact surface with the small cylinder is such as not to permit it out from the gap. On the lateral view, detail II, from left hand, a cap can be seen, duly mounted, covering the special wheel's mechanism by means of three (drawing) or more studs. This is meant to hold the grease in the wheel's interior, as well as hold the whole mechanism inside it. Detail III shows the retaining ring (there is one at the right side also) of the entire wheel with the axis moving along it. Finally, each wheel has its own axis with a total of 4 suitable shapings for the wheels to fit in when they (the shafts) are firmly interconnected. As stated previously, the wedges are retained by means of cylindrical rings, shown in detail by drawing 5. The aim is to readily be possible to replace it whenever damage occurs in one of these wheels.

The wheel's shell must be moulded, as the axes in the shell where the arms fit through and the holes with the necessary shapings the axes and the shell enter and press, receive strong pressures, and added afterwards by any method would not resist. As shown in the drawing, the radii of the wheel are three in number and as many are the cylinders. It is the cylinders which bear the weight of pressure, hence, the periphery should be covered by as many radii as possible, so that the pressure can be distributed on more cylinders and the system thus becomes more reisistant. Also, one piston should be involved with two wheels.

A typical, preferably suggested practical application of the invention involves a rail system comprising a total of nine pairs of concentrical peripheries. On the rails cylinders are rolling, at a high speed of up to 200 km/h. To cope with the centrifugal force, as it will be seen from the theory hereinafter also, the peripheries delineated by the rails are bent inwards from the horizontal level on which the unit is mounted, and have a diameter in the range of 2000 M. as it regards to the initial, outer periphery.

Nine parallel cylinders are used, each rolling along one of nine peripheries, each periphery delineated by a pair of rails. The number of nine cylinders are chosen, first, to provide an adequately free travel for each cylinder and to enable each cylinder to recover its initial force between two consecutive impacts with the corresponding pistons. Second, to allow enough space for the required traction machines to be placed intermediately to the cylinders of the same periphery. Third, to make possible and easy the job of repairing, or replacing, any worn parts of the axis below the rails.

In a typical application of the invention, each cylinder has a diameter of 200 cm and 120 cm width, separated in rounds and bound by a special, steel-made, hoop, as said previously. The rounds, or flanges, are equally-sized and interconnected by rods. The cylinder's axis is mounted on two ball-bearings fitted internally to the endsof the two surfaces in the cylinder's centre. The axis is suitably verged outside the cylinder's surfaces, forming a ridge. Sturdy, steel-made strips are inserted through them which link the cylinders together in twos. Thus, all the cylinders of the same rotatory periphery are connected to form one block. The strips (plates) are in strict contact with the ridge via either strong locks, or-if the ridge is threaded-two screws on each side. The cylinder's centre contacting the pistons is made of special steel to prevent wear. The distance between one pair of rails delineating one rotatory periphery is 110 cm, considering that the cylinder has on both sides a 5 cm steel-made hoop whereby it rolls on the rails. In a typical, preferably suggested application of the invention, the distance between each pair of rails determining one rotatory periphery from the subsequent pair of rails determining the next following periphery of rotation is 50 cm. Using the above mentioned typical distances, overall distance from the centre between the initial outer periphery of rotation and the centre of the last inner periphery of rotation will be 1280 cm. That is to say, by a simple geometrical calculation the length of the periphery, the diameter, can be found for each periphery of rotation.

All peripheries of rotation have equal numbers of cylinders, all of which must run, moving simultaneously, exactly the same distances of the circle. In this respect, the cylinders' peripheries have to be calculated depending on the periphery of rotation they belong to, and the same applies also to the wheels of the traction machines. Let's take a cylinder occupying the full length, from the outer periphery to the last inner one: the last one running the shorter length shall accordingly form the periphery, so that the cylinder can move peripherally like a straight, therefore, the cylinder has to have a certain conicity. The wheels of the traction machines must have this conicity as everything depends on the machines. Therefore, it is suggested that the cylinders should be rolled on rails, which rail must exhibit an excellent rigidity and be duly fastened in the ground (like a railroad's) and the axes system be placed under the ground in a pre-determined position.

Fitting the cylinders

As stated previously, outside the first rotatory periphery all the cylinders have their peripheries shaped depending on the periphery they belong to. The mounting of the cylinders in a parallel arrangement is effected as follows: The axes are fitted all along the circle's periphery, on one of which the pistons are fitted in a vertical position to it. Then the corresponding cylinders are placed to contact two pistons of the two first, i.e. the first and second, rotatory peripheries.

We move the first cylinder of the first rotatory periphery until it completely bends the piston, that is, 45 cm as to its travelling track, not as to the arch. Subsequently, we fix up the cylinder, then we move the second cylinder of the second rotatory periphery till it bends the piston 5 cm, measured horizontally, not arch-wise. We take the distance between the two cylinders, which determines all cylinders placed in parallel. The 5 cm is for the action of the anti-impact system and for continuous movement, as before the first cylinder bends the first piston completely, the next one bends the next piston. Supposing 5 cm does not suffice as the anti-impact system has to damp out the impact of only the cylinder with the special wheel's shell and the length of the piston and its stroke must be increased, this will be added to the 5 cm as the 40 useful one remains unchanged. The cylinders are fitted by peripheries, attached by means of strong strips into one block, as mentioned previously. The interspace between cylinders of the same peripheries is 160cm. This space is meant to receive the traction machines. Each periphery of rotation has its own traction machines. The traction machines are mounted on one frame with wheels rolling on the cylinder's rails. Attached to the frame are the strips connecting the cylinders. The number of cylinders tracted by each machine is a matter of calculation. The machines are electrically driven (DC), the current supplied to them like on trolley-buses. To keep always the same speed, they are tied in parallel any by peripheries. In this respect, for the periphery one pair of rails is created at one of the centres intermediated of the parallel cylinders and mounted on it and tracted is a frame at the level of the traction machines to the entire periphery. To this the driving machines are tied which acquire the same speed through it.

In a preferable application of the invention, each piston has a radius of 60 cm, measured from the centre of the axis, where the piston by 20 cm extends above the rails till the contact point with the cylinder. Rotation of this 20 cm extended part of the piston rotating from the vertical position to the surface of the rails, runs a horizontal distance of 45 cm. In a preferable application of the invention, since the cylinder moves peripherally and the pistons are vertical to their axes, the piston's ring is conical for a complete contact with the cylinder and the returning of the piston to the virtually vertical position after the cylinder's withdrawal where its travelling ends via the proper arrangement-stop, can be automatically effected by means of any suitably desired means (e.g.a spring, pneumatic air, etc.).

In a preferable arrangement of the invention, the first axis providing rotatory force is connected to the set of pistons from the first outer till the last inner periphery, towards the circle's centre. The distance between the first and second axis or any two consecutive axes from one another is 360 cm, measured on the outer periphery, or 355 cm measured on the inner periphery according to a geometrical calculation.

In a typical application of the invention, the supports holding the ball-bearings in which the axes rotate, must be of the utmost strength to give them longevity. For this purpose, eight double and two single tables are made, the single ones fitted with one bearing each. The double tables serve to support in twos the first piston with the second, the second one with the third, and so on. In all cases, the distancing and shapings of all these metallic tables are the same. The table is a hollow inside cast, rectangular parallelopiped in shape, duly reinforced to cope with the intense pressure it receives. All tables must have exactly the same distances from the area of connecting the bearings to the area of connecting with the support frame. The support frame consists of two equally-thick sturdy axes, each 13 meters or so. Each axis is supported on 6-7 strong bars. The bars have equal dimensions and one hole at one end for the axes to press them into. The bars are inserted vertically to each axis at pre-determined positions, and the axes are arranged in parallel. Having previously determined the parallel distances of the axes, we attach them as follows: we make strong metallic standards having pre-determined dimensions and preciseness, with a socket at the ends of a semicircle periphery of the axes. We insert them through the axes and attach them by means of clamps. Then we attach the axes with 5-6 pairs of metallic rectilinear plates. The plates lenght is greater than the parallel distance of the axes, plus two holes at such positions as for the axes to be exactly parallel when one plate is placed beneath the axes and the other above them and tie them up with screws. The entire job must be done close to the site of the system's installation. The whole system is placed in a suitable position so that the pistons to be exactly in the said desired distances when the bearings are eventually fitted; also, for a satisfactory function of the ball-bearings the axes must be fully horizontal between each other. After levelling it, we add a little layer of cement, and measure it again. We leave it to harden, then do the cement-work. The bars are previously holed at various places on them, through which iron rods are inserted. The tables bust be attachen at pre-determined places outside of the axes by means of strong bolts, as follows: The table's surface to be connected with the axis is alongside in both ends greater than the bearings' surface, and bears outside the axes the holes at suitable places. Subsequently, a strong plate equally-sized with the table's connection surface, is brought beneath the axes and, by means of the holes, they are joined with strong bolts. Because however, the connection of the two plates to the axes is not strong enough as they are supported on one point, we fit half-circles to all four connections on the axes, having exactly the same hotizontal surface. In so doing, in two square bars having lengths equal to the length part of the connection bars through the centre, with the suitable machine, a hole is drilled equal to the axes' peripheries, then we divide them in two. These are placed on the axes. All half-circles must have the adequate, same thicknesses.

The interspace between the two surfaces that are the axes' diameters and the thickness of the half-circles to the side of the connection, must be covered in equal thickness with a metallic plate, perforated at where bolts are inserted; then the bolts can be fixed up. In a combination with more supporting means, the entire system can be cemented, and so can the entire length of the peripheries, from the outer to the inner one, with the supporting floor made antiseismic for safety. Any tried amperage measuring of the experiment was ruled out, as an ammeter, either conventional or electronic, will take some time to determine energy since the impact is instant, sto the ammeter can not record a reading.

The steel centre of the cylinder whereupon impacts are exerted can be replaced by steel semicircular members joined to the main body of the cylinder at the suitable positions with bolts, and be replaced when worn out.

Because of the multiple frictions the rails may be heated and maybe to high temperatures. A system of cooling pipes is thereby mounted onto the rails.

If the cylinders along the circumference are not mutually covered by atmospheric pressure, iron plates of suitable thickness and large longitudinal length are suitably mounted being based upon the recessions provided at the shafts of the cylinders and then the laminutes to join the circumferential cylinders are passed through. The iron sheets are perforated at the points, whereupon the traction engines are joined to the cylinder laminates.

It should be noted here, that the description of the modification proposed involved and refered to only one indicative example of application, to which of course the invention is not limited to. Therefore, any change or alteration concerning arrangement, size, dimensions, shape and form (cylinder, or a sphaere), materials used, construction and assembly parts and accessoiries, are covered by this description insofaras they do not constitute a new inventive step.

No detailed study for each desired application is given, as this will be dictated each time by the application required depending on the specific requirements and conditions.

## THEORY OF INVENTION

The relevant problem lies with the rolling of a cylinders' arrangement to which the necessary tractive power is exerted along a periphery with closed circular orbit at a gradient, on suitable rails whose the outer one lies higher than the inner one to provide the adequate slope; at pre-determined distances inbetween the two rails specially designed disks-pistons are placed. The disks are fitted with dependable weights.

During the cylinder's rolling on the rails, the projected length of the said pistons is forced to make a rotatory movement with a concurrent lifting of the dependable weight, thus producing respective work.

Furthermore, a comparison of this work with that consumed for the system to operate is intended.

As shown by Fig, 7 the following forces are exerted to the rolling cylinder: A = rails' response to compression caused by cylinder A'. There is : A=A'.

B = cylinder's weight. F = tractive(driving) power of the system (not shown in the figure).

Force A is vertical to the sloping cylinder's rolling area.

Each rolling cylinder causes the disks it meets to turn, and this elevates the dependable weight thus consuming further work $W_2 = B' \cdot H$ (H:height of elevation).

This work is equal to the work consumed by the cylinder for the elevation:

$B' . H = F$ arch length and $F = \dfrac{B' . H}{\text{arch length}}$ $\Gamma$

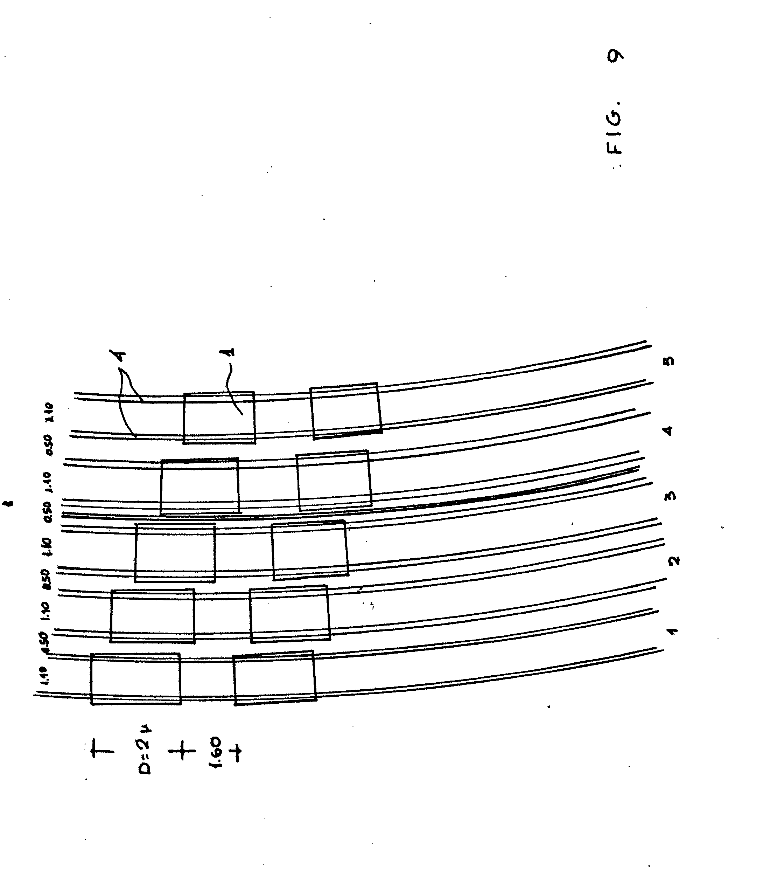

As shown in the Figure 8, as it rotates the disk goes round two arches: one having a radius $\Gamma'$ and the other with a radius $2\Gamma'$.

In addition, these arches correspond to a right angle, as follows: $H = {}^1\!/_2\,\pi\,\Gamma_1'$, whilst the arch length of radius $2\Gamma_1'$ is equal to $\Pi\Gamma_1'$ (double the first one). The work of B is equal to the work of F , or $B.{}^1\!/_2\Pi\Gamma_1' = F\pi r_1'$ . It follows $F = {}^1\!/_2\,m.g.$ -6-

Force F is required to lift weight B', therefore, it does not change with the number of the weights (disks). Moreover, the F and friction r are homoparallel. Therefore, for one cylinder and one disk, the tractive force is : $f = F + r$ -7-.

For n cylinders and n disks, the force is $f = F + nr = F + T$ -8-

Where is : $T = n.r$; and the work produced is : W = work of F + work of T (refering always to one turn) -9-

against this work the lifted weights will produce work:

$W = Y\text{roll}.. V_{bk} . B . H$ -10-

From 9 and 10 it can be seen that the work of one turn of the system with n cylinders and n disks is:

The force B is vertical to the ground.

A and B have a resultant Fk (centripetal force), which is :

$Fk =$ -1-

Whereas $B = m.g$

A is the hypotenuse of a right-angle triangle having vertical lines Fk and B; therefore, it will be:

$$A = \sqrt{F^2 + B^2} = m\,\sqrt{g^1 + \frac{U^4}{R^2}}$$

Where is:

m = cylinder's mass

h = cylinder's height

d = density of cylinder's material

v = speed (path tangent) of cylinder

R = Cylinder path's radius

7

As shown in the same figure, there is:

$$E_\varphi\omega = \frac{Fk=U^2}{B \quad R.g}  \qquad -3-$$

Where is : $\varphi$ = angle of inclination. Because of A' each rolling cylinder has a friction $\tau$, which is $\tau = I.A$   -4-

For each cylinder's free movement a work consumption is required from the "traction" force, which is equal to the work consumed by the friction force. That is,

$W_1' = \tau.S$. Where is: S distance; and for one revolution, there is:

$W' = \tau.2\pi.R$   -5-

Obviously, this work for n cylinders will be: $W = n.\tau.2\pi.R$   -5-

$= T.2\pi R \, (T \, n\pi)$

$W = V_1^2 \, . \, (m.g.H + T.2\pi R)$   -9'-

Where is : $T = n.\tau$

The time of one turn of disk and cylinder is:

$$\frac{t=S}{V} \quad \frac{2\pi R}{V} \qquad -11-$$

and the power consumed for it is :

$$I=\frac{W}{t} = \frac{mgH+2\pi R.\tau.u}{2\pi.R}  \qquad -12-$$

From the above it becomes clear that the power needed becomes less with the inclination reduction, its limit being the power we would desire if the system moved horizontally and linearly.

Calculations on an experimental model

I. Cylinder's free movement

How much energy is required for a cylinder having mass M 2,550 kgs to move at a final constant speed $V = 200$ km/h ? If it is supposed that the cylinder is rolling without sliding, it will acquire kinetic energy as follows:

$E_k = 1/2 \, Mu^2 + \frac{11}{2}\omega^2$

Where is:

$E_k$ = total kinetic energy of cylinder

I = moment of inertia of cylinder

U = cylinder's linear velocity

$\omega$ = cylinder's angular velocity.

For a solid cylinder, it is known that:

$I = 1/2Mr^2$, where is: r cylinder's radius.

M cylinder's Mass

Consequently, $E_k = 1/2 \, Mu^2 + 1/2 \, (1/2 \, Mr^2\omega^2) = 1/2Mu^2(1 + 1/2) = 3/4Mu^2$ It is known that

$$\omega=\frac{u}{r} = 2\pi\eta \implies$$

$$\omega=\frac{200x \, 1}{1 \quad 3.000} =55.55 \quad And$$

$$\eta=55,55=8.9 \sim 9 \ revs./s=540 \ revs/min.$$

$$2\eta$$

Thus, if the linear velocity of a cylinder having $M = 2,550$ kgs is 200 km/h, its angular velocity is 55,55 rads/S, and the number of revolutions $\eta$ is 540 a minute. And $E = 3/4x2, 550x55,55^2 = 5,9x10^6$ J

2. Cylinder's obstacled movement

How much energy is required for the cyinder to move if at equal pre-determined intervals (distance S) the cylinder impacts against a piston having mass m ,diameter $d = 60$ cm, and such impact results in the lifting of a weight having a mass M, or equal to the cylinder's mass at a height h, pre-determined?

We accept that immediately upon the impact against each piston the cylinder has acquired the speed and the total energy calculated above:

$E_k = 5,9 \times 10^6$ J.

We accept en elastic impact because of metal-made cylinder and piston, plus a negligible friction present, the critical h (lift height of the weight of a mass M) at which the cylinder stops after the impact. In this case, there is:

$$E_k = Mgh \Longrightarrow h = \frac{E_k}{Mg} = \frac{5,9 \times 10^6 J}{25,0 \ 16 \ N} \Longrightarrow$$

$$h = 236 \text{ m}$$

Therefore, if the critical h is 236 m for h < 236 m, there will be a surplus energy of the cylinder present, when there will be:

$E = E_k - Mgh$; where is:

$E$ = cylinder's surplus energy after the impact ; if we take a.g.

$h = 100$ m, the energy surplus will be:

$E = 5,9 \times 10^6$ J - 25,016 x 100 = 3,398,500 J

Refering now to the cylinder's linear displacement, it gives the equation

Kinetic energy before the impact = F.S, where F is the force exerted to the cylinder, and S is the distance aimed for.

Therefore we have:

$$\frac{M}{2}u^2 = F.S = M\gamma S \Longrightarrow \qquad S = \frac{\frac{1}{2}Mu^2}{M\gamma} = \frac{u^2}{2\gamma}$$

representing the cylinder's acceleration.

For the linear accelarating movement, there will be also:

$S \pm 1/2\gamma.t^2$, t representing the time in which the distance S is run.

$$\Longrightarrow \gamma = \frac{2S}{t^2} \quad \text{and, after replacement:}$$

$$S = \frac{u^2}{2x \frac{2S}{t^2}} \Longrightarrow S = \frac{u^2 t^2}{4S} \Longrightarrow S^2 = \frac{u^2 t^2}{4} \Longrightarrow$$

$$S = ut /2$$

Therefore, the distance S is linearly connected with the time, that is, there is a straight graphical representation having an inclination $e\omega^{-1} \frac{u}{2}$.

## Claims

1. Energy-producing mechanism by converting the impetus and angular momentum of cylinders into rotatory movement of axes, characterized in that it involves nine concentrical peripheries, each periphery delineated by a pair of rails fixed to a sloping ground, on which cylinders are rolling, which during their circular track bend pistons via which, by means of an appropriate arrangement under the rails, a rotatory movement of axes is obtained where such axes extend radially to the centre of said periphery.

2. The mechanism of Claim 1, in which each of the said peripheries has the suitable number of joined cylinders, positioned in such distances as to intermediately allow spaces for the special traction machines, at the appropriate intervals, meant for the traction of each group of joined cylinders; to secure uniform speeds, the traction machines are connected in the peripheries as well as in parallel.

3. The mechanism of Claim 1, in which the pairs of the said pistons impacting with the cylinders are cone-shaped, their return to the vertical position after the pressing cylinders have withdrawn, being automatically effected via the appropriate return apparatus.

4. The mechanism of Claim 1, in which the mounting system on which the mechanism is connected and made antiseismic.

5. Energy-producing method by converting the impetus and angular momentum of cylinders into rotatory movement of axes, chara cterized in that it can be implemented via the apparatus arrangement asserted in the above Claims, explained in the attached Description.

FIG. 1

LATERAL VIEW A-A

FIG. 2

EP 0 333 625 A2

FIG. 3

EP 0 333 625 A2

FIG. 4

EP 0 333 625 A2

LETERAL VIEM B-B

FIG. 5

EP 0 333 625 A2

SEMICUTTING VIEW ΑΒΓΔ'

SEMICUTTING VIEW ΑΒΓΔ

FIG. 6

FIG. 7

FIG. 8

FIG. 9

FIG. 10

EP 0 333 625 A2